# EUROPEAN PATENT SPECIFICATION

(11) **EP 3 254 908 B1**
(45) Date of publication and mention of the grant of the patent: **13.11.2019**
(21) Application number: 16173045.2
(22) Date of filing: 06.06.2016
(51) Int. Cl.: B60R 22/46

(54) **A BELT RETRACTOR FOR A VEHICLE SAFETY BELT SYSTEM AND METHOD OF USING SUCH BELT RETRACTOR**
GURTAUFROLLER FÜR EIN FAHRZEUGSICHERHEITSGURTSYSTEM UND VERFAHREN ZUR VERWENDUNG SOLCH EINES GURTAUFROLLERS
ENROULEUR DE CEINTURE POUR UN SYSTÈME DE CEINTURE DE SÉCURITÉ DE VÉHICULE ET PROCÉDÉ D'UTILISATION D'UN TEL ENROULEUR DE CEINTURE DE SÉCURITÉ

(43) Date of publication of application: 13.12.2017
(73) Proprietor: TRW Automotive GmbH, 73553 Alfdorf (DE); TRW Polska Sp.z.o.o., 42-200 Czestochowa (PL)
(72) Inventor: Krukowski, Krzysztof, 42-200 Cz stochowa (PL); Migo , Dawid, 29-100 W oszczowa (PL)
(74) Representative: ZF TRW Patentabteilung

(56) References cited:
- WO-A1-2015/037485
- DE-A1- 19 544 918
- DE-A1-102006 021 381
- DE-A1-102010 051 422
- DE-A1-102010 051 463
- US-A1- 2015 336 539

## Description

The invention relates to a belt retractor for a vehicle safety belt system. In particular, the invention relates to a belt retractor comprising a belt tensioner for tensioning a safety belt during a tensioning phase, and a load limiter for limiting the load applied by the safety belt on a vehicle occupant after the tensioning phase during a load limiting phase. The invention further relates to a method of using a belt retractor of the before-mentioned kind.

A belt tensioner is intended to tension the safety belt in case of a crash so that the vehicle occupant takes part as quickly as possible in the overall deceleration of the vehicle. By tensioning the safety belt especially the negative effects of the so-called film spool effect (belt webbing loosely rolled on the belt reel) and belt slack (belt webbing that is not in close contact with the vehicle occupant), which impede the restraint of the vehicle occupant, are reduced.

A load limiter provides that the load of the safety belt acting on the vehicle occupant after tensioning of the safety belt does not excessively increase. In order to relieve the vehicle occupant, after locking the belt reel the belt reel is nevertheless allowed to rotate in the unwinding direction (opposite to the winding direction), the rotation being decelerated, however, by energy conversion, i.e. by performing work (e.g. twisting a torsion rod).

A particular type of a belt retractor, which became known from published German patent application DE 10 2006 031 359 A1, uses a deformable load transmission element instead of a linearly moving toothed rack for tensioning the safety belt. The deformable load transmission element is accommodated in a space-saving curved tube and can be moved by activation of a drive unit towards a toothed pinion coupled to the belt reel. The deformable load transmission element rotates the pinion so that the belt reel is rotated in a winding direction. The deformable load transmission element engages the teeth of the pinion relatively softly and smoothly, thus avoiding the rough tooth on tooth contact of common rack-and-pinion tensioners. Variants of this type of belt retractor are shown, inter alia, in DE 10 2010 051 418 A1, DE 10 2010 051 419 A1, DE 10 2010 051 420 A1, DE 10 2010 051 422 A1, DE 10 2006 021 381 A1 and DE 10 2010 051 463 A1.

It is an object of the invention to provide a reliable decoupling of the load transmission element from the pinion after the belt tensioning phase so as not to impede a subsequent load limiting phase.

This problem is solved by a belt retractor according to claim 1. Advantageous and expedient embodiments of the belt retractor according to the invention are recited in the corresponding dependent claims.

The invention provides a belt retractor for a vehicle safety belt system comprising a belt tensioner for tensioning a safety belt during a tensioning phase, and a load limiter for limiting the load applied by the belt on a vehicle occupant during a load limiting phase after the tensioning phase. The belt tensioner includes a frame, a belt reel, a toothed pinion, a drive unit and an elongated load transmission element. The belt reel is rotatably supported in the frame, and the pinion is coupled to the belt reel. The pinion is movable in a radial direction from a first position, in which the pinion is in engagement with the load transmission element, to a second position, in which the pinion is not in engagement with the load transmission element.

The invention makes use of the finding that the load transmission element forces the pinion - and the belt reel coupled thereto - to rotate only as long as the teeth of the pinion engage the load transmission element in a force transmitting manner. This is the case when the pinion teeth cut into the moving load transmission element. Insofar the belt tensioning phase is similar to known techniques.

However, during the load limiting phase the belt force, i.e. the force exerted by the occupant on the safety belt, pushes the belt reel - and the pinion coupled thereto - into the second position so that the teeth of the pinion become disengaged from the load transmission element. Thus, the belt reel is effectively decoupled, and in the further process of the load limiting phase rotation of the belt reel is not affected by the load transmission element.

In an advantageous embodiment of the invention, the pinion (together with the belt reel) is movable within the frame of the belt retractor. This can be accomplished by a "soft" bearing using a spring element, for example, so that the belt reel axis can be somewhat shifted while the belt reel is still capable of rotating.

Preferably, the movement of the pinion within the frame is limited by a recess. More precisely, the peripheral edge of the recess can be shaped to serve as a guide and/or to provide defined first and second (stop) positions for the pinion.

In accordance with the inventive concept, in the first position the distance between the load transmission element and the pinion should be small enough to ensure that the teeth of the pinion overlap with the load transmission element.

Accordingly, in the second position the distance between the load transmission element and the pinion should be large enough to ensure that rotation of the belt reel is not impeded by the load transmission element.

Thus, the distance between the load transmission element and the pinion, which can be measured as the distance between the longitudinal center axis of the load transmission element and the center axis of rotation of the pinion, is significantly larger in the second position as compared to the corresponding distance in the first position.

The invention further provides a method of using a belt retractor as defined above. During the belt tensioning phase the drive unit moves the load transmission element in a tensioning direction so that the load transmission element engages the teeth of the pinion so as to rotate the pinion and the belt reel in a winding direction, thereby urging the pinion in the first position. At the beginning of the load limiting phase the load transmission element is in contact with the teeth of the pinion so that the force applied by the safety belt on the belt reel urges the pinion into the second position.

Regarding the advantages of the method according to the invention, reference is made to the advantages recited above in connection with the belt retractor according to the invention.

Further features and advantages of the invention will become apparent from the following description and from the accompanying drawings to which reference is made. In the schematic drawings:
- Figure 1 shows an exploded view of a belt retractor according to the invention;
- Figure 2 shows a sectional view of the assembled belt retractor;
- Figure 3 shows another sectional view of a belt retractor according to the invention during a tensioning phase; and
- Figure 4 shows the belt retractor of Figure 3 during a force-limiting operation.

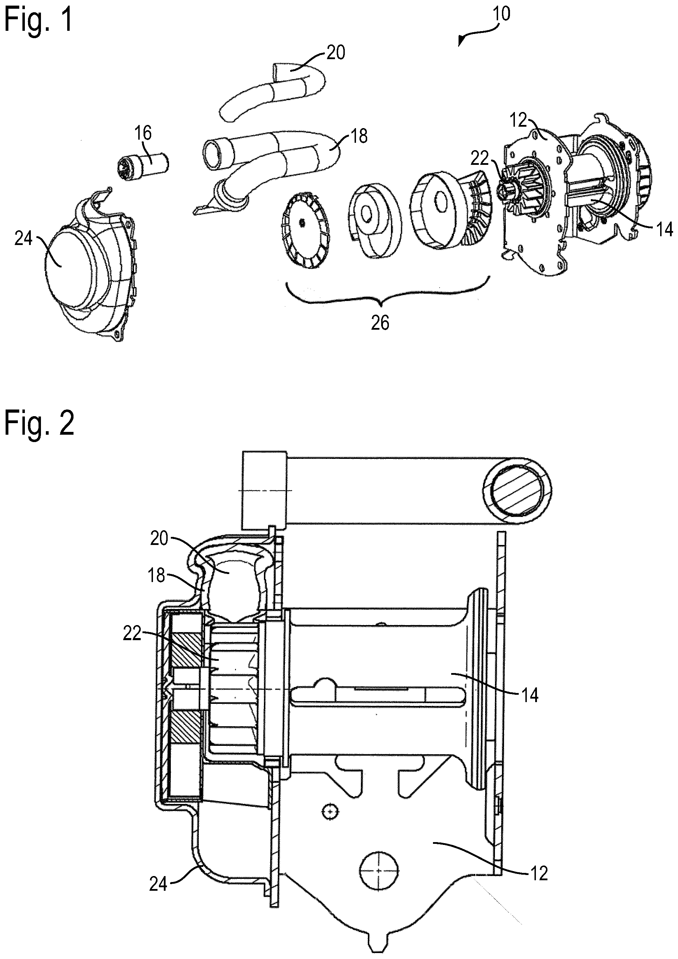

In Figure 1 the substantial component parts of an example embodiment of a belt retractor 10 comprising a pyrotechnically driven belt tensioner are shown. In Figure 2 the belt retractor is illustrated in the assembled state. The belt retractor 10 comprises a frame 12 supporting a rotatable belt reel 14 onto which a safety belt is wound. Furthermore, the belt retractor 10 includes a force-limiting mechanism (load limiter) not shown here in detail.

The belt tensioner of the belt retractor 10 includes a pyrotechnic drive unit 16, a tensioner tube 18 having a bent tubular portion, a load transmission element 20 disposed in the tensioner tube 18 as well as a toothed pinion 22 rigidly coupled to the belt reel 14. "Rigidly coupled" means that the pinion 22 and the belt reel 14 always rotate jointly or in a defined gear ratio. The component parts of the belt tensioner are jointly arranged in a tensioner housing 24. In Figure 1 furthermore the retracting mechanism 26 of the belt retractor 10 is shown. This mechanism is not important to the function of the belt tensioner and the load limiter so that it is not explained in detail.

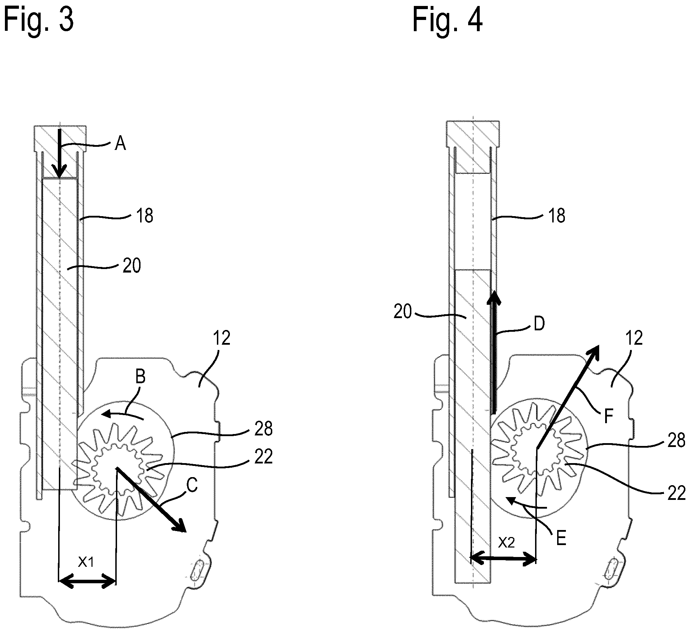

The belt reel 14 and the pinion 22 rigidly coupled thereto are supported in the frame 12 in such a manner that they can move between a first position shown in Figure 3 and a second position shown in Figure 4. This is possible because the belt reel 14 is supported by a soft bearing or an open bearing using a spring element (spring cover).In case of higher loads the belt reel is pushed out of the bearing. It is also possible to use a bearing which allows a limited movement in case of higher loads.

For tensioning of the safety belt the pyrotechnic drive unit 16 is activated, thereby generating excessive pressure in the tensioner tube 18. In this way the load transmission element 20 is pressurized in the tensioner tube 18 and moved forward in a tensioning direction A away from the drive unit 16 so that the load transmission element 20 engages in the pinion 22, as shown in Figure 3. Upon further forward movement of the load transmission element 20 in the tensioning direction A the pinion 22 is rotated forcibly in a winding direction B. The belt reel 14 coupled to the pinion 22 is rotated with the latter so that the safety belt is wound onto the belt reel 14 and thus belt tensioning is effectuated.

During this belt tensioning phase, when the teeth of the pinion 22 cut into the plastically deformable material of the load transmission element 20, the force exerted by the forward moving load transmission element 20 on the pinion 22 pushes the pinion 22 in the direction indicated by arrow C into the first position within the recess 28, thus keeping the load transmission element 20 and the pinion 22 engaged. The pinion 22 may initially be already located in the first position, so that the pinion is actually not moved but continuously pushed by the load transmission element 20 to remain in the first position.

In the first position the distance between the load transmission element 20 and the pinion 22 is small enough to ensure that the teeth of the pinion 22 overlap with the load transmission element 20. According to Figure 3 this distance, which can be measured between the longitudinal center axis of the load transmission element 20 and the center axis of rotation of the pinion 22, for example, has a value X1.

At the end of the belt tensioning phase the safety belt is tensioned and the belt webbing stress significantly increases, i. e. rotation of the belt reel 14 and the pinion 22 in the winding direction B is stopped as no belt webbing can be wound up on the belt reel 14 anymore. In this situation the teeth of the pinion 22 are still in engagement with a portion of the load transmission element 20.

During a force-limiting operation (load limiting phase) following the belt tensioning, a limited rotation of the belt reel 14 opposite the winding direction B is allowed so as to prevent the load acting on the vehicle occupant from increasing excessively. As shown in Figure 4, once the occupant moves forward there is an increasing force D exerted by the belt webbing acting on the belt reel 14 in the unwinding direction E. Since the pinion 22 is still in engagement with the load transmission element 20 there is a significant resistance preventing a significant rotation of the pinion 22 and the belt reel 14 at first. Accordingly, the pinion 22 and the belt reel 14 tend to follow the webbing force D, so they move in the direction indicated by arrow F into the second position within the recess 28. Thus, the pinion 22 loses contact with the load transmission element 20. In effect, in the second position the distance between the load transmission element 20 and the pinion 22 is large enough to ensure that the teeth of the pinion 22 do not overlap with the load transmission element 20 anymore.

According to Figure 4 the distance measured between the longitudinal center axis of the load transmission element 20 and the center axis of rotation of the pinion 22 has a value X2 which is significantly larger than X1 (X2 > X1). As a result, rotation of the belt reel 14 is not impeded by the load transmission element 20 during the force-limiting operation when the belt reel 14 and the pinion 22 are in the second position.

### List of Reference Signs

- 10: belt retractor
- 12: frame
- 14: belt reel
- 16: drive unit
- 18: tensioner tube
- 20: load transmission element
- 22: pinion
- 24: tensioner housing
- 26: retracting mechanism
- 28: recess
- A: tensioning direction
- B: winding direction
- C: first belt reel movement direction
- D: webbing force
- E: unwinding direction
- F: second belt reel movement direction

## Claims

1. A belt retractor (10) for a vehicle safety belt system, the belt retractor (10) comprising a belt tensioner for tensioning a safety belt during a tensioning phase, and a load limiter for limiting the load applied by the safety belt on a vehicle occupant during a load limiting phase after the tensioning phase,
the belt tensioner including a frame (12), a belt reel (14), a toothed pinion (22), a drive unit (16) and an elongated load transmission element (20),
the belt reel (14) being rotatably supported in the frame (12),
the pinion (22) being coupled to the belt reel (14),
wherein the pinion (22) is movable in a radial direction from a first position, in which the pinion (22) is in engagement with the load transmission element (20), to a second position, in which the pinion (22) is not in engagement with the load transmission element (20).

2. The belt retractor (10) according to claim 1, **characterized in that** the pinion (22) is movable within the frame (12).

3. The belt retractor (10) according to claim 2, **characterized in that** the movement of the pinion (22) within the frame (12) is limited by a recess (28).

4. The belt retractor (10) according to any of the preceding claims, **characterized in that** in the first position the distance between the load transmission element (20) and the pinion (22) is small enough to ensure that the teeth of the pinion (22) overlap with the load transmission element (20).

5. The belt retractor (10) according to any of the preceding claims, **characterized in that** in the second position the distance between the load transmission element (20) and the pinion (22) is large enough to ensure that rotation of the belt reel (14) is not impeded by the load transmission element (20).

6. The belt retractor (10) according to claim 4 or claim 5, **characterized in that** the distance between the load transmission element (20) and the pinion (22) is the distance between the longitudinal center axis of the load transmission element (20) and the center axis of rotation of the pinion (22).

7. A method of using a belt retractor (10) according to one of the preceding claims,
wherein during the belt tensioning phase the drive unit (16) moves the load transmission element (20) in a tensioning direction (A) so that the load transmission element (20) engages the teeth of the pinion (22) so as to rotate the pinion (22) and the belt reel (14) in a winding direction (B), thereby urging the pinion (22) in the first position, and
wherein at the beginning of the load limiting phase the load transmission element (20) is in contact with the teeth of the pinion (22) so that the force (D) applied by the safety belt on the belt reel (14) urges the pinion (22) into the second position.

## Patentansprüche

1. Gurtaufroller (10) für ein Fahrzeugsicherheitsgurtsystem, wobei der Gurtaufroller (10) einen Gurtstraffer zur Straffung eines Sicherheitsgurts während einer Gurtstraffungsphase umfasst und einen Kraftbegrenzer zur Begrenzung der Kraft, die vom Sicherheitsgurt auf einen Fahrzeuginsassen, während einer Kraftbegrenzungsphase nach einer Gurtstraffungsphase, ausgeübt wird,
wobei der Gurtstraffer einen Rahmen (12), eine Gurtspule (14), ein Ritzel (22), eine Antriebseinheit (16) und ein längliches Kraftübertragungselement (20) umfasst,
wobei die Gurtspule (14) drehbar im Rahmen (12) gelagert ist,
wobei das Ritzel (22) mit der Gurtspule (14) gekoppelt ist,
wobei das Ritzel (22) in radialer Richtung von einer ersten Position, in der das Ritzel (22) im Eingriff mit dem Kraftübertragungselement (20) steht, in eine zweite Position, in der das Ritzel (22) nicht im Eingriff mit dem Kraftübertragungselement (20) steht, bewegt werden kann.

2. Gurtaufroller (10) gemäß Anspruch 1, **dadurch gekennzeichnet, dass** das Ritzel (22) innerhalb des Rahmens (12) beweglich ist.

3. Gurtaufroller (10) gemäß Anspruch 2, **dadurch gekennzeichnet, dass** die Bewegung des Ritzels (22) innerhalb des Rahmens (12) durch eine Aussparung (28) begrenzt wird.

4. Gurtaufroller (10) gemäß einem der vorhergehenden Ansprüche, **dadurch gekennzeichnet, dass** in der ersten Position der Abstand zwischen dem Kraftübertragungselement (20) und dem Ritzel (22) klein genug ist, um eine Überdeckung der Zähne des Ritzels (22) mit dem Kraftübertragungselement (20) sicherzustellen.

5. Gurtaufroller (10) gemäß einem der vorhergehenden Ansprüche, **dadurch gekennzeichnet, dass** in der zweiten Position der Abstand zwischen dem Kraftübertragungselement (20) und dem Ritzel (22) groß genug ist, um sicherzustellen, dass die Drehung der Gurtspule (14) nicht vom Kraftübertragungselement (20) behindert wird.

6. Gurtaufroller (10) gemäß Anspruch 4 oder 5, **dadurch gekennzeichnet, dass** der Abstand zwischen dem Kraftübertragungselement (20) und dem Ritzel (22) dem Abstand zwischen der Längsmittelachse des Kraftübertragungselements (20) und der Drehmittelachse des Ritzels (22) entspricht.

7. Verfahren zur Verwendung eines Gurtaufrollers (10) gemäß einem der vorhergehenden Ansprüche,
wobei die Antriebseinheit (16) während der Gurtstraffungsphase das Kraftübertragungselement (20) in eine Straffrichtung (A) bewegt, sodass das Kraftübertragungselement (20) in die Zähne des Ritzels (22) eingreift, um das Ritzel (22) und die Gurtspule (14) in eine Aufrollrichtung (B) zu drehen, wodurch das Ritzel (22) in die erste Position gedrängt wird, und
wobei am Anfang der Kraftbegrenzungsphase das Kraftübertragungselement (20) in Kontakt mit den Zähnen des Ritzels (22) steht, sodass die vom Sicherheitsgurt auf die Gurtspule (14) ausgeübte Kraft (D) das Ritzel in die zweite Position drängt.

## Revendications

1. Un rétracteur de ceinture (10) pour un système de ceinture de sécurité du véhicule, le rétracteur de ceinture (10) comprenant un tendeur de ceinture pour tendre une ceinture de sécurité pendant une phase de tension, et un limiteur de charge pour limiter la charge appliquée par la ceinture de sécurité sur un occupant de véhicule pendant une phase de limitation de la charge après la phase de tension,
le tendeur de ceinture comprenant un cadre (12), une bobine de ceinture (14), un pignon denté (22), une unité d'entraînement (16) et un élément de transmission de charge allongé (20),
la bobine de ceinture (14) étant supportée de façon rotative dans le cadre (12),
le pignon (22) étant couplé à la bobine de ceinture (14),
pour lequel le pignon (22) est mobile dans une direction radiale à partir d'une première position, dans laquelle le pignon (22) est en engagement avec l'élément de transmission de la charge (20), à une deuxième position, dans laquelle le pignon (22) n'est pas en engagement avec l'élément de transmission de la charge(20).

2. Rétracteur de ceinture (10) selon la revendication 1, **caractérisé en ce que** le pignon (22) est mobile dans le cadre (12).

3. Rétracteur de la ceinture (10) selon la revendication 2, **caractérisé en ce que** le mouvement du pignon (22) dans le cadre (12) est limité par un renfoncement (28).

4. Rétracteur de ceinture (10) selon l'une quelconque des revendications précédentes, **caractérisé en ce que** dans la première position, la distance entre l'élément de transmission de la charge (20) et le pignon (22) est assez petite pour s'assurer que les dents du pignon (22) se chevauchent avec l'élément de transmission de la charge (20).

5. Rétracteur de la ceinture (10) selon l'une quelconque des revendications précédentes, **caractérisé en ce que** dans la deuxième position, la distance entre l'élément de transmission de la charge (20) et le pignon (22) est assez grande pour s'assurer que la rotation de la bobine de ceinture (14) n'est pas entravée par l'élément de transmission de la charge (20).

6. Rétracteur de ceinture (10) selon la réclamation 4 ou la réclamation 5, **caractérisé en ce que** la distance entre l'élément de transmission de la charge (20) et le pignon (22) est la distance entre l'axe central longitudinal de l'élément de transmission de la charge (20) et l'axe central de rotation du pignon (22).

7. Une méthode d'utilisation d'un rétracteur de ceinture (10) selon l'une des revendications précédentes,
pour laquelle, durant la phase de tension de la ceinture, l'unité d'entraînement (16) déplace l'élément de transmission de la charge (20) dans une direction de tension (A) de sorte que l'élément de transmission de la charge (20) engage les dents du pignon (22) de manière à faire pivoter le pignon (22) et la bobine de ceinture (14) dans une direction en rotation (B), amenant ainsi le pignon (22) en première position, et
pour laquelle, au début de la phase de limitation de la charge, l'élément de transmission de la charge (20) est en contact avec les dents du pignon (22) de sorte que la force (D) appliquée par la ceinture de sécurité sur la bobine de ceinture (14) pousse le pignon (22) dans la deuxième position.
